# FASCICULE DE BREVET EUROPEEN

(11) **EP 3 356 892 B1**
(45) Date de publication et mention de la délivrance du brevet: **04.09.2019**
(21) Numéro de dépôt: 16774713.8
(22) Date de dépôt: 26.09.2016
(51) Int. Cl.: G04B 31/00, G04B 17/04, G04B 13/02, F16C 11/12

(54) **COMPOSANT MÉCANIQUE À GUIDAGE FLEXIBLE, NOTAMMENT POUR MOUVEMENT HORLOGER**
MECHANISCHE KOMPONENTE MIT FLEXIBLER FÜHRUNG, INSBESONDERE FÜR EIN UHRWERK
MECHANICAL COMPONENT WITH FLEXIBLE GUIDANCE, PARTICULARLY FOR A TIME-KEEPING MOVEMENT

(30) Priorité: 29.09.2015 CH 14102015
(43) Date de publication de la demande: 08.08.2018
(73) Titulaire: Patek Philippe SA Genève, 1204 Genève (CH)
(72) Inventeur: CHABLOZ, David, 74700 Sallanches (FR)
(74) Mandataire: Micheli & Cie SA
(86) Numéro de dépôt international: PCT/IB2016/055740
(87) Numéro de publication internationale: WO 2017/055987

(56) Documents cités:
- EP-A2- 2 273 323
- CH-A- 474 101
- US-A- 3 520 127
- US-A- 6 146 044
- US-A1- 2006 127 171

## Description

La présente invention concerne un composant mécanique à guidage flexible, notamment pour un mouvement horloger.

Les composants mécaniques à guidage flexible sont conçus pour être guidés dans une direction déterminée en rotation ou en translation sans frottements. Ces composants comprennent des parties élastiques de guidage qui relient une partie mobile à une partie de fixation servant à fixer le composant sur un support tel que la platine d'un mouvement horloger. Des exemples de tels composants sont décrits dans les documents EP 2037335, EP 2273323 et WO 2011/120180.

Ces composants présentent l'inconvénient d'être vulnérables aux chocs ou à des mauvaises manipulations lors du montage. Lors d'un choc ou d'une mauvaise manipulation, en effet, la partie mobile peut être entraînée dans une direction non souhaitée et ainsi, par exemple, perdre le contact avec un organe partenaire ou heurter et endommager un autre organe. Pendant un tel déplacement de la partie mobile, les parties élastiques peuvent aussi subir une déformation permanente qui nuira à la précision de fonctionnement du composant.

La présente invention vise à remédier à cet inconvénient, ou au moins à l'atténuer, et propose à cette fin un composant mécanique à guidage flexible comprenant :
- une première partie,
- une deuxième partie entourant au moins partiellement la première partie,
- des parties élastiques de guidage reliant les première et deuxième parties et agencées pour guider un déplacement relatif des première et deuxième parties dans un plan déterminé,
caractérisé en ce que la première partie est solidaire d'au moins un flasque couvrant au moins partiellement la deuxième partie pour bloquer des déplacements relatifs des première et deuxième parties en dehors du plan déterminé.

De préférence, la première partie est solidaire de deux dits flasques situés sur deux faces respectives opposées du composant mécanique à guidage flexible.

Dans des exemples de réalisation, les parties élastiques de guidage sont agencées pour guider un déplacement relatif en rotation des première et deuxième parties dans le plan déterminé.

Avantageusement, le ou l'un au moins des flasques et la deuxième partie peuvent comprendre des parties respectives qui coopèrent pour bloquer des déplacements relatifs en translation des première et deuxième parties dans le plan déterminé.

Plus particulièrement, le ou l'un au moins des flasques peut comprendre une lèvre circulaire coopérant avec la deuxième partie pour bloquer des déplacements relatifs en translation des première et deuxième parties dans le plan déterminé.

Le composant mécanique à guidage flexible selon l'invention peut en outre comprendre au moins un élément amortisseur entre le ou l'un au moins des flasques et la deuxième partie.

De préférence, la première partie, la deuxième partie et les parties élastiques de guidage forment ou font partie d'une même pièce monolithique, et le ou les flasques sont assemblés à la pièce monolithique.

Dans des exemples de réalisation, la première partie est une partie mobile et la deuxième partie est une partie de fixation.

Dans d'autres exemples de réalisation, la première partie est une partie de fixation et la deuxième partie est une partie mobile.

La présente invention propose également un mouvement horloger comprenant un composant mécanique à guidage flexible tel que défini ci-dessus, et dans lequel la première partie est une partie mobile, la deuxième partie est une partie de fixation et le ou l'un au moins des flasques porte un organe coopérant avec un organe mobile partenaire du mouvement.

La présente invention propose enfin un mouvement horloger comprenant un composant mécanique à guidage flexible tel que défini ci-dessus, et dans lequel la première partie est une partie de fixation, la deuxième partie est une partie mobile et la deuxième partie porte un organe coopérant avec un organe mobile partenaire du mouvement.

Ledit organe coopérant avec un organe mobile partenaire du mouvement est par exemple une roue dentée telle qu'une roue d'embrayage.

D'autres caractéristiques et avantages de la présente invention apparaîtront à la lecture de la description détaillée suivante faite en référence aux dessins annexés dans lesquels :
- la figure 1 est une vue en perspective d'une partie d'un composant mécanique à guidage flexible selon un premier mode de réalisation de l'invention ;
- les figures 2 à 4 sont respectivement une vue en perspective, une demi-vue en perspective et une vue en coupe plane du composant mécanique à guidage flexible selon le premier mode de réalisation de l'invention ;
- la figure 5 est une vue en perspective partielle du composant mécanique à guidage flexible selon le premier mode de réalisation de l'invention, montrant notamment des amortisseurs ;
- les figures 6 et 7 sont respectivement une demi-vue en perspective et une vue en coupe plane d'un composant mécanique à guidage flexible selon un deuxième mode de réalisation de l'invention ;
- les figures 8 à 10 sont respectivement une vue en perspective, une demi-vue en perspective et une vue en coupe plane d'un composant mécanique à guidage flexible selon un troisième mode de réalisation de l'invention ;
- les figures 11 à 13 sont respectivement une vue en perspective, une demi-vue en perspective et une vue en coupe plane d'un composant mécanique à guidage flexible selon un quatrième mode de réalisation de l'invention ;
- la figure 14 est une vue en perspective partielle d'un mouvement horloger comprenant un composant mécanique à guidage flexible selon l'invention ;
- la figure 15 est une vue en perspective d'une bascule d'embrayage formée par un flasque du composant mécanique à guidage flexible de la figure 14.

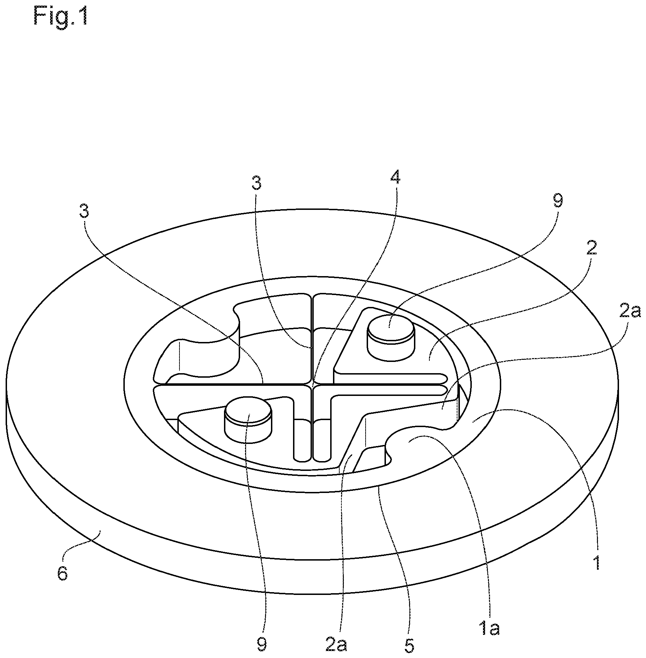

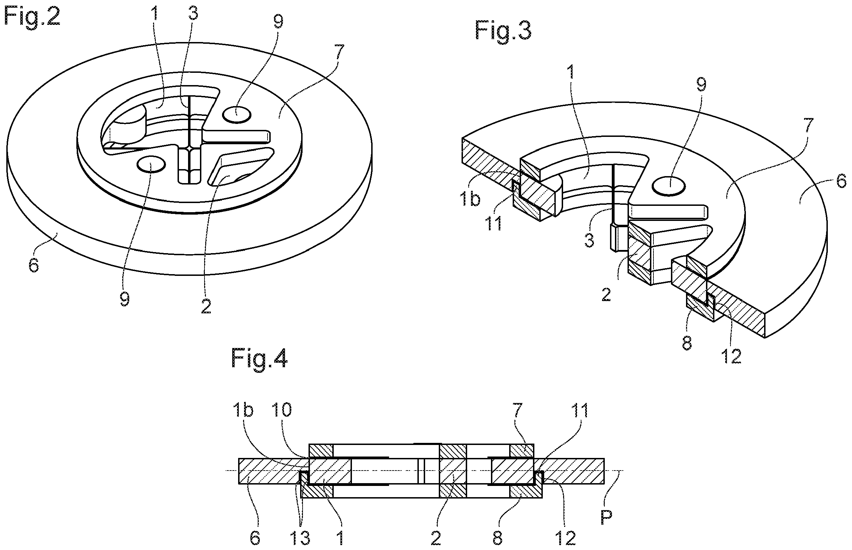

En référence à la figure 1, un composant mécanique à guidage flexible selon un premier mode de réalisation de l'invention, destiné à être utilisé dans un mouvement horloger, comprend une partie de fixation 1 et une partie mobile 2 reliées par des lames élastiques 3. Dans l'exemple représenté, les lames élastiques 3 sont du type « lames croisées non séparées » et se croisent ainsi physiquement en un point 4. Les lames élastiques 3 forment un pivot flexible permettant à la partie mobile 2 d'être guidée sans frottements en rotation autour du point 4. La partie de fixation 1, la partie mobile 2 et les lames élastiques 3 sont coplanaires. Le plan moyen dans lequel sont situées la partie de fixation 1, la partie mobile 2 et les lames élastiques 3, et dans lequel la partie mobile 2 pivote par rapport à la partie de fixation 1, est représenté à la figure 4 et désigné par le repère P. La partie de fixation 1 présente une forme annulaire qui entoure la partie mobile 2. Une protubérance radiale 1a située sur la face intérieure de la partie de fixation 1 sert de butée à des surfaces 2a de la partie mobile 2 pour limiter le débattement angulaire de la partie mobile 2 par rapport à la partie de fixation 1.

La partie de fixation 1 peut être chassée dans une ouverture 5 de forme correspondante, circulaire, d'un support 6 constitué typiquement par la platine ou un pont du mouvement horloger. A la figure 1, le support 6 est représenté schématiquement sous la forme d'un anneau.

La partie de fixation 1, la partie mobile 2 et les lames élastiques 3 forment une même pièce monolithique réalisée par exemple en silicium ou en toute autre matière appropriée selon la technique de gravure ionique réactive profonde dite « DRIE » (Deep Reactive Ion Etching), en nickel, alliage de nickel ou toute autre matière appropriée selon la technique LIGA (lithographie, galvanoplastie, moulage), en acier, cuivre-béryllium, maillechort ou autre alliage métallique par fraisage ou par électroérosion, ou en verre métallique par moulage.

Comme montré aux figures 2 à 4, le composant mécanique à guidage flexible selon l'invention comprend en outre deux flasques 7, 8 sur ses faces supérieure et inférieure respectivement. Chaque flasque 7, 8 est fixé à la partie mobile 2 par des moyens d'assemblage tels que des tétons ou goupilles 9. Chaque flasque 7, 8 présente une forme circulaire sensiblement de même diamètre que la partie de fixation 1 et couvre ainsi la partie de fixation 1 et la partie mobile 2. Un jeu 10 entre la partie de fixation 1 et les flasques 7, 8 permet à ces derniers de se déplacer avec la partie mobile 2 sans contact avec la partie de fixation 1. Les flasques 7, 8 peuvent être évidés, comme représenté.

En cas de chocs subis par le mouvement horloger ou de mauvaises manipulations lors du montage, les flasques 7, 8 servent de butées venant s'appuyer contre la partie de fixation 1 pour bloquer les déplacements de la partie mobile 2 hors du plan P, notamment les translations perpendiculaires au plan P ou les rotations (torsions) autour d'axes situés dans le plan P. Ces flasques 7, 8 solidaires de la partie mobile 2 et couvrant la partie de fixation 1 qui elle-même entoure la partie mobile 2 permettent un guidage précis de la partie mobile 2, en n'autorisant qu'un déplacement minime de la partie mobile 2 hors du plan P.

De préférence, comme représenté, l'un au moins des flasques 7, 8, par exemple le flasque inférieur 8, comprend une lèvre circulaire 11 se logeant dans un dégagement circulaire 12 pratiqué dans le support 6 en regard du flanc 1b de la partie de fixation 1. Cette lèvre 11 bloque, en cas de chocs ou de mauvaises manipulations, toute translation de la partie mobile 2 dans le plan P. Un léger jeu radial 13 entre la lèvre 11 et le flanc 1b de la partie de fixation 1, d'une part, et entre la lèvre 11 et la paroi du dégagement 12, d'autre part, permet à la lèvre 11 de ne pas générer de frottements pendant le fonctionnement normal du composant mécanique à guidage flexible. En variante, la lèvre circulaire 11 pourrait être reçue dans une rainure circulaire pratiquée dans la partie de fixation 1 ou dans le support 6. Dans d'autres variantes, la lèvre circulaire pourrait être définie par la partie de fixation 1 ou le support 6, et être engagée dans une rainure circulaire pratiquée dans un flasque 7, 8 ou entourer le flanc d'un flasque 7, 8.

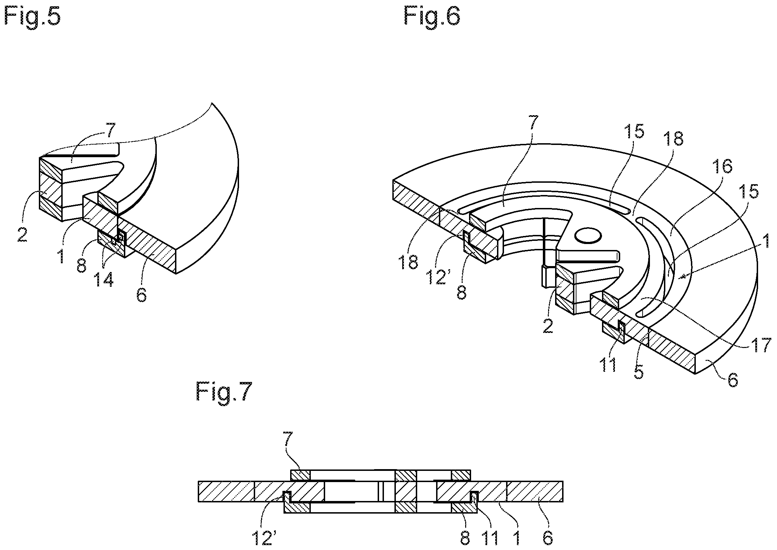

En référence à la figure 5, des éléments amortisseurs 14, sous la forme par exemple de joints toriques, peuvent être insérés entre au moins l'un des flasques 7, 8 et la partie de fixation 1 pour amortir les chocs subis par la partie mobile 2, notamment dans la direction perpendiculaire au plan P et dans les directions radiales.

Les figures 6 et 7 montrent un composant mécanique à guidage flexible selon un deuxième mode de réalisation de l'invention. Dans ce deuxième mode de réalisation, des lumières 15 formées dans la partie de fixation 1 divisent cette dernière en deux parties annulaires concentriques 16, 17 reliées l'une à l'autre par des parties de liaison discrètes 18, la partie annulaire extérieure 16 subissant l'essentiel des contraintes de déformation pendant le chassage du composant mécanique à guidage flexible dans l'ouverture 5 du support 6. Dans ce mode de réalisation, les flasques 7, 8 ne couvrent que partiellement la partie de fixation 1, et la lèvre circulaire 11 est reçue dans une rainure circulaire 12' pratiquée dans la partie annulaire intérieure 17 de la partie de fixation 1.

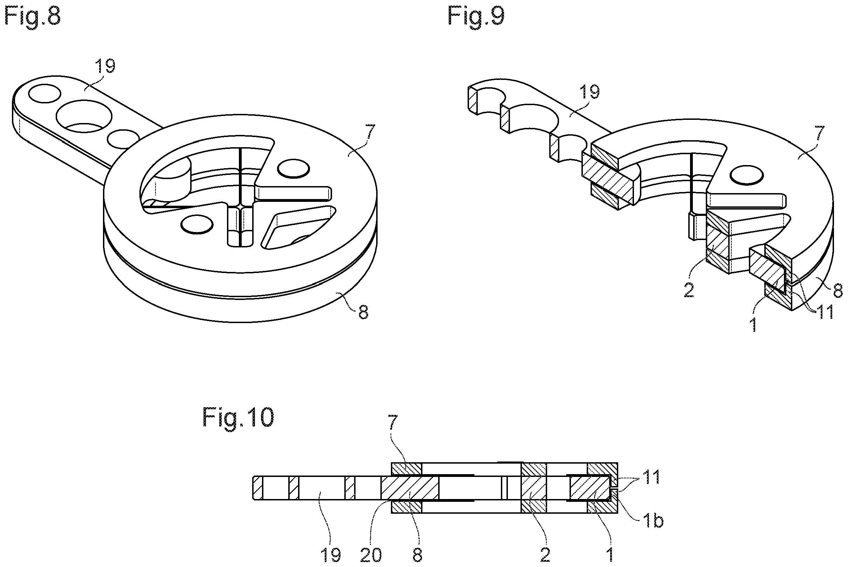

Les figures 8 à 10 montrent un composant mécanique à guidage flexible selon un troisième mode de réalisation de l'invention. Dans ce troisième mode de réalisation, le composant mécanique à guidage flexible n'est pas destiné à être chassé dans une ouverture d'un support mais à être fixé audit support (pont ou platine par exemple) par l'intermédiaire d'un bras de fixation 19 prolongeant radialement la partie de fixation annulaire 1. Dans ce mode de réalisation, les flasques 7, 8 comportent chacun une lèvre circulaire 11 qui entoure le flanc 1b de la partie de fixation 1 avec un léger jeu radial pour permettre une rotation sans frottements de la partie mobile 2 et des flasques 7, 8 en fonctionnement normal et pour, en cas de chocs ou de mauvaises manipulations, bloquer les translations de la partie mobile 2 dans le plan du composant mécanique à guidage flexible. Les lèvres 11 sont interrompues dans la zone du bras 19 pour définir une fenêtre 20 traversée par le bras 19. En variante, un seul des flasques 7, 8 pourrait comporter une lèvre 11.

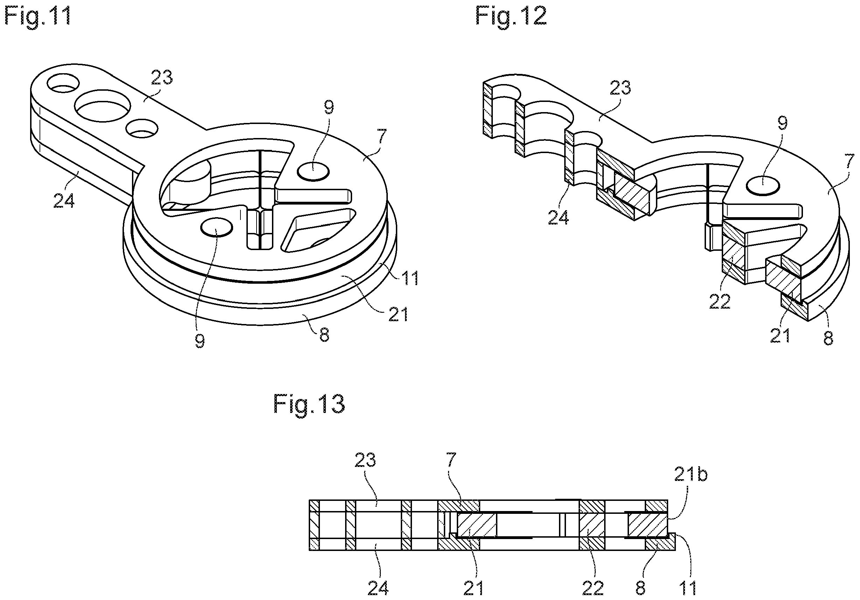

Les figures 11 à 13 montrent un composant mécanique à guidage flexible selon un quatrième mode de réalisation de l'invention. Dans ce quatrième mode de réalisation, la partie de fixation et la partie mobile sont interverties. Ainsi, le composant mécanique à guidage flexible comprend une partie 21 identique à la partie de fixation 1 des figures 1 à 4 et une partie 22 identique à la partie mobile 2 des figures 1 à 4, mais la partie 21 constitue la partie mobile tandis que la partie 22 constitue une partie de fixation. La partie de fixation 22 est fixée aux flasques 7, 8, par exemple au moyen de tétons ou goupilles 9. Chaque flasque 7, 8 est prolongé dans une direction radiale par un bras 23, 24 qui est assemblé au bras 24, 23 de l'autre flasque 8, 7 pour former un organe de fixation permettant le montage du composant mécanique à guidage flexible sur un support, typiquement la platine ou un pont du mouvement horloger. L'un au moins des flasques 7, 8 peut comprendre une lèvre circulaire 11 entourant le flanc 21b de la partie mobile 21 pour, en cas de chocs ou de mauvaises manipulations, bloquer les translations de la partie mobile 21 dans son plan de pivotement.

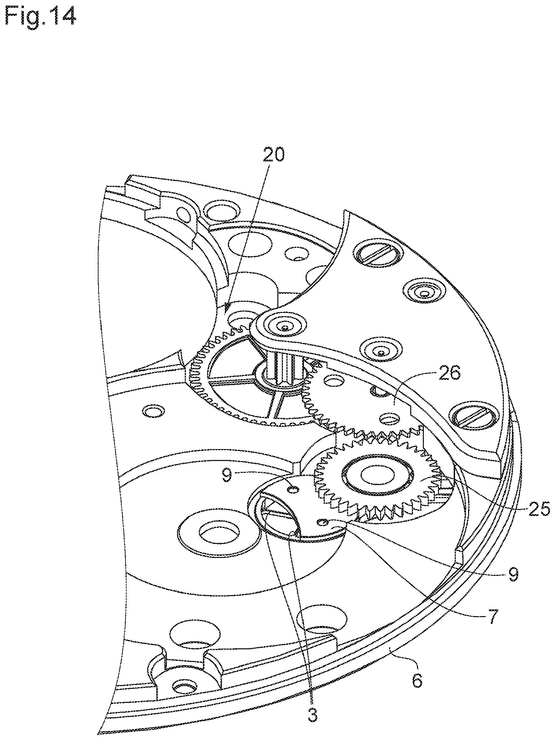

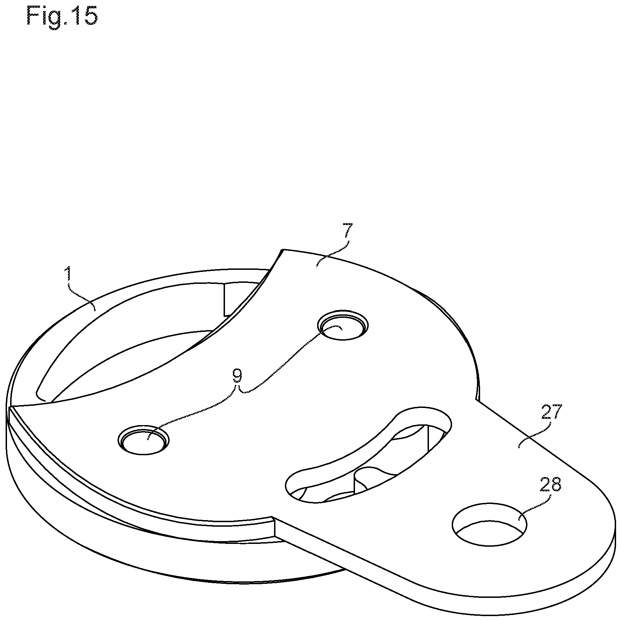

Les figures 14 et 15 montrent un exemple d'application du composant à guidage flexible selon l'invention. Dans cet exemple, le composant à guidage flexible est du type illustré aux figures 1 à 4. Son flasque supérieur 7 est une bascule d'embrayage portant une roue d'embrayage 25 qui, dans la position embrayée de la bascule d'embrayage, engrène avec une roue 26. A cet effet, le flasque supérieur 7 comprend un prolongement radial 27 qui définit un palier 28 recevant un roulement à billes pour le pivotement de la roue d'embrayage 25. Dans d'autres applications, le flasque supérieur 7 pourrait définir un doigt ou un bec coopérant avec un organe mobile partenaire tel qu'une étoile. Lorsque le composant à guidage flexible est du type illustré aux figures 11 à 13, l'organe (roue dentée, doigt, bec, etc.) coopérant avec l'organe mobile partenaire est porté par la partie mobile 21 située entre les flasques 7, 8.

## Revendications

1. Composant mécanique à guidage flexible comprenant :
- une première partie (2 ; 22),
- une deuxième partie (1 ; 21) entourant au moins partiellement la première partie (2 ; 22),
- des parties élastiques de guidage (3) reliant les première et deuxième parties (2, 1 ; 22, 21) et agencées pour guider un déplacement relatif des première et deuxième parties dans un plan déterminé (P),
**caractérisé en ce que** la première partie (2 ; 22) est solidaire d'au moins un flasque (7, 8) couvrant au moins partiellement la deuxième partie (1 ; 21) pour bloquer des déplacements relatifs des première et deuxième parties (2, 1 ; 22, 21) en dehors du plan déterminé (P).

2. Composant mécanique à guidage flexible selon la revendication 1, **caractérisé en ce que** la première partie (2 ; 22) est solidaire de deux dits flasques (7, 8) situés sur deux faces respectives opposées du composant mécanique à guidage flexible.

3. Composant mécanique à guidage flexible selon la revendication 1 ou 2, **caractérisé en ce que** les parties élastiques de guidage (3) sont agencées pour guider un déplacement relatif en rotation des première et deuxième parties (2, 1 ; 22, 21) dans le plan déterminé (P).

4. Composant mécanique à guidage flexible selon l'une quelconque des revendications 1 à 3, **caractérisé en ce que** le ou l'un au moins des flasques (7, 8) et la deuxième partie (1, 6 ; 21) comprennent des parties respectives (11, 1b, 12; 11, 12'; 11, 21b) qui coopèrent pour bloquer des déplacements relatifs en translation des première et deuxième parties (2, 1 ; 22, 21) dans le plan déterminé (P).

5. Composant mécanique à guidage flexible selon l'une quelconque des revendications 1 à 3, **caractérisé en ce que** le ou l'un au moins des flasques (7, 8) comprend une lèvre circulaire (11) coopérant avec la deuxième partie (1, 6; 21) pour bloquer des déplacements relatifs en translation des première et deuxième parties (2, 1 ; 22, 21) dans le plan déterminé (P).

6. Composant mécanique à guidage flexible selon l'une quelconque des revendications 1 à 5, **caractérisé en ce qu'**il comprend au moins un élément amortisseur (14) entre le ou l'un au moins des flasques (7, 8) et la deuxième partie (1 ; 21).

7. Composant mécanique à guidage flexible selon l'une quelconque des revendications 1 à 6, **caractérisé en ce que** la première partie (2 ; 22), la deuxième partie (1 ; 21) et les parties élastiques de guidage (3) forment ou font partie d'une même pièce monolithique.

8. Composant mécanique à guidage flexible selon la revendication 7, **caractérisé en ce que** le ou les flasques (7, 8) sont assemblés à la pièce monolithique.

9. Composant mécanique à guidage flexible selon l'une quelconque des revendications 1 à 8, **caractérisé en ce que** la première partie (2) est une partie mobile et la deuxième partie (1) est une partie de fixation.

10. Composant mécanique à guidage flexible selon l'une quelconque des revendications 1 à 8, **caractérisé en ce que** la première partie (22) est une partie de fixation et la deuxième partie (21) est une partie mobile.

11. Mouvement horloger comprenant un composant mécanique à guidage flexible selon la revendication 9, et dans lequel le ou l'un au moins des flasques (7, 8) porte un organe (25) coopérant avec un organe mobile partenaire (26) du mouvement.

12. Mouvement horloger comprenant un composant mécanique à guidage flexible selon la revendication 10, et dans lequel la deuxième partie (21) porte un organe coopérant avec un organe mobile partenaire du mouvement.

13. Mouvement horloger selon la revendication 11 ou 12, **caractérisé en ce que** ledit organe coopérant avec un organe mobile partenaire (26) du mouvement est une roue dentée (25).

## Patentansprüche

1. Mechanisches Bauteil mit flexibler Führung, das Folgendes umfasst:
- einen ersten Teil (2; 22),
- einen zweiten Teil (1; 21), der den ersten Teil (2; 22) zumindest teilweise umgibt,
- elastische Führungsteile (3), die den ersten und den zweiten Teil (2, 1; 22, 21) verbinden und gestaltet sind, um eine relative Verlagerung des ersten und des zweiten Teils in einer bestimmten Ebene (P) zu führen,
**dadurch gekennzeichnet, dass** der erste Teil (2; 22) fest mit mindestens einem Flansch (7, 8) verbunden ist, der den zweiten Teil (1; 21) zumindest teilweise umgibt, um relative Verlagerungen des ersten und des zweiten Teils (2, 1; 22, 21) außerhalb der bestimmten Ebene (P) zu sperren.

2. Mechanisches Bauteil mit flexibler Führung nach Anspruch 1, **dadurch gekennzeichnet, dass** der erste Teil (2; 22) fest mit zwei von den Flanschen (7, 8) verbunden ist, die sich auf zwei entsprechenden gegenüberliegenden Flächen des mechanischen Bauteils mit flexibler Führung befinden.

3. Mechanisches Bauteil mit flexibler Führung nach Anspruch 1 oder 2, **dadurch gekennzeichnet, dass** die elastischen Führungsteile (3) gestaltet sind, um eine relative Drehverlagerung des ersten und des zweiten Teils (2, 1; 22, 21) in der bestimmten Ebene (P) zu führen.

4. Mechanisches Bauteil mit flexibler Führung nach einem der Ansprüche 1 bis 3, **dadurch gekennzeichnet, dass** der oder mindestens einer von den Flanschen (7, 8) und der zweite Teil (1, 6, ; 21) entsprechende Teile (11, 1b, 12; 11, 12'; 11, 21b) umfassen, die zusammenwirken, um relative translatorische Verlagerungen des ersten und des zweiten Teils (2, 1; 22, 21) in der bestimmten Ebene (P) zu sperren.

5. Mechanisches Bauteil mit flexibler Führung nach einem der Ansprüche 1 bis 3, **dadurch gekennzeichnet, dass** der oder mindestens einer von den Flanschen (7, 8) eine kreisförmige Lippe (11) umfasst, die mit dem zweiten Teil (1, 6; 21) zusammenwirkt, um relative translatorische Verlagerungen des ersten und des zweiten Teils (2, 1; 22, 21) in der bestimmten Ebene (P) zu sperren.

6. Mechanisches Bauteil mit flexibler Führung nach einem der Ansprüche 1 bis 5, **dadurch gekennzeichnet, dass** es mindestens ein Stoßdämpferelement (14) zwischen dem oder mindestens einem von den Flanschen (7, 8) und dem zweiten Teil (1; 21) umfasst.

7. Mechanisches Bauteil mit flexibler Führung nach einem der Ansprüche 1 bis 6, **dadurch gekennzeichnet, dass** der erste Teil (2; 22), der zweite Teil (1; 21) und die elastischen Führungsteile (3) ein gleiches monolithisches Teil bilden oder Teil davon sind.

8. Mechanisches Bauteil mit flexibler Führung nach Anspruch 7, **dadurch gekennzeichnet, dass** der oder die Flansche (7, 8) an dem monolithischen Teil montiert sind.

9. Mechanisches Bauteil mit flexibler Führung nach einem der Ansprüche 1 bis 8, **dadurch gekennzeichnet, dass** der erste Teil (2) ein bewegliches Teil ist und der zweite Teil (1) ein Befestigungsteil ist.

10. Mechanisches Bauteil mit flexibler Führung nach einem der Ansprüche 1 bis 8, **dadurch gekennzeichnet, dass** der erste Teil (22) ein Befestigungsteil ist und der zweite Teil (21) ein bewegliches Teil ist.

11. Uhrwerk, das ein mechanisches Bauteil mit flexibler Führung nach Anspruch 9 umfasst, und wobei der oder mindestens einer der Flansche (7, 8) ein Organ (25) trägt, das mit einem beweglichen Partnerorgan (26) des Uhrwerks zusammenwirkt.

12. Uhrwerk, das ein mechanisches Bauteil mit flexibler Führung nach Anspruch 10 umfasst und wobei der zweite Teil (21) ein Organ trägt, das mit einem beweglichen Partnerorgan des Uhrwerks zusammenwirkt.

13. Uhrwerk nach Anspruch 11 oder 12, **dadurch gekennzeichnet, dass** das Organ, das mit einem beweglichen Partnerorgan (26) des Uhrwerks zusammenwirkt, ein Zahnrad (25) ist.

## Claims

1. Mechanical component with flexible guidance comprising:
- a first part (2; 22),
- a second part (1; 21) at least partially surrounding the first part (2; 22),
- elastic guidance parts (3) connecting the first and second parts (2, 1; 22, 21) and arranged to guide a relative displacement of the first and second parts in a specific plane (P),
**characterised in that** the first part (2; 22) is fixed relative to at least one flange (7, 8) which at least partially covers the second part (1; 21) to block relative displacements of the first and second parts (2, 1; 22, 21) outside the specific plane (P).

2. Mechanical component with flexible guidance as claimed in claim 1, **characterised in that** the first part (2; 22) is fixed relative to two said flanges (7, 8) located on two respective opposing faces of the mechanical component with flexible guidance.

3. Mechanical component with flexible guidance as claimed in claim 1 or 2, **characterised in that** the elastic guidance parts (3) are arranged to guide a relative rotational displacement of the first and second parts (2, 1; 22, 21) in the specific plane (P).

4. Mechanical component with flexible guidance as claimed in any one of claims 1 to 3, **characterised in that** the flange or at least one of the flanges (7, 8) and the second part (1, 6; 21) comprise respective parts (11, 1b, 12; 11, 12'; 11, 21b) which cooperate to block relative translational displacements of the first and second parts (2, 1; 22, 21) in the specific plane (P).

5. Mechanical component with flexible guidance as claimed in any one of claims 1 to 3, **characterised in that** the flange or at least one of the flanges (7, 8) comprises a circular lip (11) cooperating with the second part (1, 6; 21) to block relative translational displacements of the first and second parts (2, 1; 22, 21) in the specific plane (P).

6. Mechanical component with flexible guidance as claimed in any one of claims 1 to 5, **characterised in that** it comprises at least one shock absorber element (14) between the flange or at least one of the flanges (7, 8) and the second part (1; 21).

7. Mechanical component with flexible guidance as claimed in any one of claims 1 to 6, **characterised in that** the first part (2; 22), the second part (1; 21) and the elastic guidance parts (3) form or are part of a same monolithic piece.

8. Mechanical component with flexible guidance as claimed in claim 7, **characterised in that** the flange or flanges (7, 8) is/are mounted on the monolithic piece.

9. Mechanical component with flexible guidance as claimed in any one of claims 1 to 8, **characterised in that** the first part (2) is a mobile part and the second part (1) is a fixing part.

10. Mechanical component with flexible guidance as claimed in any one of claims 1 to 8, **characterised in that** the first part (22) is a fixing part and the second part (21) is a mobile part.

11. Timepiece movement comprising a mechanical component with flexible guidance as claimed in claim 9, and in which the flange or at least one of the flanges (7, 8) carries a member (25) cooperating with a partner mobile member (26) of the movement.

12. Timepiece movement comprising a mechanical component with flexible guidance as claimed in claim 10, and in which the second part (21) carries a member cooperating with a partner mobile member of the movement.

13. Timepiece movement as claimed in claim 11 or 12, **characterised in that** said member cooperating with a partner mobile member (26) of the movement is a cog (25).
